# EUROPEAN PATENT APPLICATION

(11) **EP 4 134 154 A1**
(43) Date of publication of application: **15.02.2023**
(21) Application number: 22798047.1
(22) Date of filing: 11.05.2022
(51) Int. Cl.: B01D 53/78, B01D 53/62, B01D 53/50, C01C 1/24

(54) **AMMONIA PROCESS-BASED DESULFURIZATION AND DECARBURIZATION INTEGRATED APPARATUS AND METHOD**

(30) Priority: 11.05.2021 CN 202110510852
(71) Applicant: Jiangnan Environmental Protection Group Inc., KY1-1002 Grand Cayman (KY)
(72) Inventor: ZHANG, Jun, Nanjing, Jiangsu 211100 (CN); LUO, Jing, Nanjing, Jiangsu 211100 (CN); XU, Tianqi, Ridgefield Park, New Jersey 07660 (US)
(74) Representative: Santarelli
(86) International application number: PCT/CN2022/092214
(87) International publication number: WO 2022/237834

(57) **Abstract**

The present invention is applicable to the desulfurization and decarbonization of a process gas containing sulfur oxides and CO₂, and belongs to the field of environmental protection. Ammonia is used as a desulfurizing and decarbonizing agent. The gas enters first a desulfurization apparatus for desulfurization, to produce an ammonium sulfate fertilizer. The desulfurized gas enters a decarbonization apparatus to remove carbon dioxide in the gas, and to produce an ammonium bicarbonate fertilizer. The decarbonized gas, that contains free ammonia, is washed with a desulfurization circulating fluid and then with water. The washing fluids are returned to the desulfurization tower for use as an absorbing agent for desulfurization. This technology integrates decarbonization and desulfurization technologies organically, and uses acidic desulfurization circulating fluid to wash ammonia, thereby achieving a high ammonia washing efficiency and solving the ammonia slip problem suffered by decarbonization processes. The process is simpler, the investment and operation costs are low, ammonium sulfate and ammonium bicarbonate fertilizers are co-produced, and there is no need to inject all of CO₂ back to underground for sequestration. Rather, part of CO₂ can be used to produce downstream products such as urea, soda ash, etc. The product mix can be flexibly adjusted, and by-product ammonia can be used, thereby realizing treating wastes with wastes and a circular economy.

## Description

### TECHNICAL FIELD

The disclosure relates to the technical field of environmental protection, and in particular, to apparatus and methods for removal of sulfur oxides and CO₂ using ammonia.

### BACKGROUND

Gas species in the air, such as CO₂ and methane, may let shortwave solar radiation pass through, but can block longwave radiation from the earth surface to the cosmic space. With the increase of concentration of greenhouse gases such as CO₂, the incident energy is greater than the escaping energy, leading to a temperature increase in the earth atmosphere, which is referred to as the greenhouse effect.

Carbon dioxide is the most important greenhouse gas, and the use of fossil fuels is a main discharge source thereof. The total CO₂ discharge in China has ranked No. 1 in the world. Moreover, the energy structure in China with coal as the main source will continue for a while, and coal energy will still be the foundation for peak shaving with new energy and for energy security. China has promised to the world that it will peak carbon emissions by 2030 and achieve carbon neutrality by 2060. The capture, storage, and utilization of CO₂ in flue gas play an important role in the control and reduction of greenhouse gas emission and in addressing the greenhouse effect and global warming issues.

At present, the mainstream carbon capture technology adopted worldwide is the amine method. Possible issues with amine method are high operating cost, and high discharge of wastes that is difficult to treat. New decarbonization technologies have been actively studied both in China and in other countries. Compared with the amine method, the ammonia method provides easy regeneration and low operating cost, and a decarbonization byproduct is ammonium bicarbonate fertilizer. Alternatively, part of the decarbonization circulating fluid may be regenerated to obtain CO₂, which can be used for the production of downstream products such as urea, soda ash, polycarbonate, etc., and for enhanced oil recovery, beverage production, and welding, and injected back directly underground or into oceans. Ammonium bicarbonate is a typical compound multi-nutrient fertilizer that can provide nitrogen and CO₂ to plants at the same time, which is particularly suitable for modern agriculture with soilless culture and plant growth in a greenhouse, providing CO₂ reclamation and carbon recycling, and avoiding potential secondary pollution and environmental accidents caused by underground carbon storage. Compared with decarbonization using the amine method, ammonia provides high CO₂ absorption efficiency and ease of regeneration of the ammonium bicarbonate, which greatly lower the decarbonization cost.

Ammonia-based decarbonization technology has been the focus of research and the best way to solve greenhouse gases. However, ammonia is volatile, and decarbonization needs to take place under alkaline conditions, which increases ammonia slip. Without solving these problems, ammonia slip may lead to higher decarbonization cost and secondary pollution.

Patent CN104707451A discloses a method for ammonia-based carbon capture and chemical synthesis from flue gas, which is implemented in a flue gas absorption and synthesis apparatus. The flue gas absorption and synthesis apparatus includes a flue gas pipeline, an absorbing tower and a carbonization tower that are connected in parallel, an ammonia removing tower, and a solid-liquid separating device. Ammonia water is used as an absorbing agent to capture CO₂ in the flue gas, sodium sulfate is used as a transforming medium to produce chemical products such as sodium carbonate and sodium bicarbonate. For the ammonia-containing tail gas after decarbonization, a simple water washing method is used to remove the ammonia, which leads to large ammonia slip.

CN201110039363.2 discloses a system and a process of using an ammonia-based process to capture and absorb sulfur dioxide and carbon dioxide under normal pressure, wherein desulfurization is performed first, followed by decarbonization, and a plurality of heat exchangers are provided in the desulfurization and decarbonization units to control the absorption temperature. At the same time, concentrated aqueous ammonia is used first for desulfurization and decarbonization, and dilute aqueous ammonia is then used for desulfurization and decarbonization. After the decarbonization, the gas is discharged directly. Absorption using aqueous ammonia at only low temperature and low concentration cannot satisfactorily reduce ammonia slip. In addition, the concentration of the aqueous ammonia cannot be too low, and the low concentration aqueous ammonia will bring in a large amount of water, which inhibits the crystallization of ammonium sulfate as a desulfurization product and ammonium bicarbonate as a decarbonization product.

CN104874272A discloses an apparatus and a method of integrated desulfurization and carbon dioxide capture, wherein the SO₂ in the flue gas is removed first in an ammonia-based desulfurization device, and then the flue gas is cooled in a direct contact cooling device before entering a decarbonization tower. After the decarbonization, the gas enters an ammonia washing tower that uses water for washing. After the washing, the flue gas enters a direct contact heating device, where some ammonia is removed in the spraying contact heating process. The aqueous solution discharged from the direct contact cooling tower is used as the spraying contact solution, and the solution after the direct contact spraying is cooled by a cooling tower and used for direct contact cooling spraying. The ammonia solution in the water washing tower enters the decarbonization tower for decarbonization or enters a stripping tower for ammonia removal. An acidic reagent, sulfuric acid, is added in a regeneration contact tower to enhance the ammonia washing. This method may have the following problems. Returning the water after direct water washing to decarbonization adds a lot of water into the decarbonization system, increasing the capital and operating cost. Further washing of ammonia with sulfuric acid will consume the sulfuric acid. The process is complicated, where separate arrangements of a contact cooling device and a contact re-heating device are required, and this leads to high capital and operating costs.

### SUMMARY OF THE INVENTION

In view of the above problems, the present inventors have developed an integrated technology of ammonia-based desulfurization and decarbonization based on the experience of ammonia-based desulfurization. During the desulfurization process, the temperature of the absorption liquid and/or the process gas is cooled to meet the temperature requirements of the subsequent decarbonization; the ammonia-containing process gas after decarbonization is first absorbed by the desulfurization circulating liquid, and the absorbed circulating solution is returned to the desulfurization functional area for desulfurization, thereby reducing the amount of ammonia added for desulfurization; the exhaust gas after decarbonization is further washed by using fresh water, and after the washing the ammonia-containing washing water is also returned to the desulfurization functional area, as a replenishment of washing water for the desulfurization particulate scrubbing; a condensate water generated in the desulfurization particulate matter washing zone is purified through membrane separation, and the resulting purified water is used as a makeup water for ammonia washing, and the excess can be discharged from the device for external use.

The present disclosure can have the following advantages:
1. Good washing efficiency that is achieved by the use of the acidic desulfurization absorbing fluid to wash the ammonia-containing process gas;
2. The use of the desulfurization circulating fluid to remove ammonia in the process gas after decarbonization and the direct use of the desulfurization circulating fluid resulted from the ammonia washing in desulfurization, which simplify the process and realize integrated desulfurization and decarbonization;
3. After ammonia washing, the direct use of the ammonia-containing washing water as a makeup water for desulfurization particulate scrubbing, which reduces desulfurization makeup water;
4. No need to separately provide a contact cooling device, which simplifies the process;
5. Recycle of condensate water, after purification via membrane separation, eliminating wastewater discharge;
6. Ammonium sulfate and ammonium bicarbonate fertilizers that are recovered, and the possibility that decarbonization circulating fluid may be regenerated, partially or wholly, to obtain CO₂. The CO₂ can be used for beverage production, enhanced oil recovery, welding, and the production of downstream products including urea, soda ash, sodium bicarbonate, polycarbonate, polyurethane, food-grade CO₂, CO₂ gas fertilizer, potassium bicarbonate, and the like, which eliminates the need to inject all the CO₂ back to underground for sequestration, truly realizing carbon emission reduction; and
7. Eliminating a need to control SO₂ concentration at the outlet of a desulfurization functional area to be ≤ 2 ppm and removing sulfur oxides that are not removed in the desulfurization functional area in the decarbonization apparatus, thereby lowering capital and operating cost of the desulfurization apparatus.

### BRIEF DESCRIPTION OF THE DRAWINGS

FIG. 1 is an illustrative block flow diagram in accordance with an embodiment of the inventive process.
FIG. 2 shows an apparatus for integrated ammonia-based desulfurization and decarbonization in accordance with an embodiment of the invention.
FIG. 3 shows a CO₂ regeneration section of an apparatus for integrated ammonia-based desulfurization and decarbonization in accordance with an embodiment of the invention.

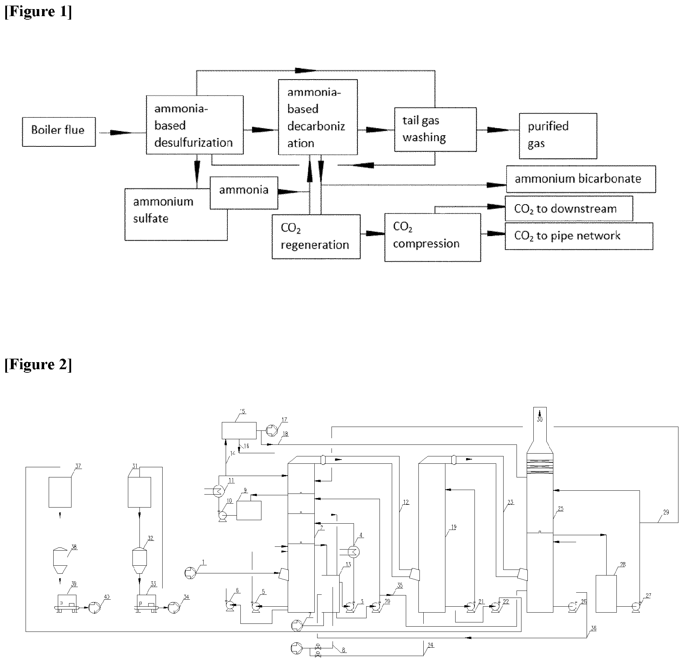

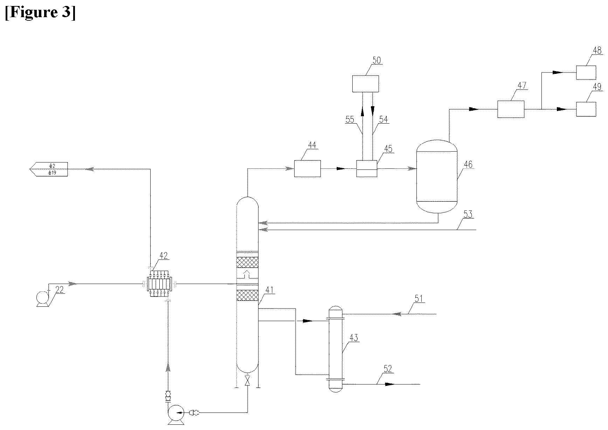

In FIG. 2 and FIG. 3, the reference numerals have the following meanings:
- 1. process gas;
- 2. desulfurization functional area;
- 3. desulfurization circulating pump 1#;
- 4. desulfurization heat exchanger-a;
- 5. desulfurization circulating pump-a;
- 6. ammonium sulfate discharge pump;
- 7. oxidation air;
- 8. going to the desulfurization system for ammonia addition;
- 9. desulfurization circulating water tank;
- 10. desulfurization circulating pump-b;
- 11. desulfurization heat exchanger-b;
- 12. post-desulfurization tail gas;
- 13. desulfurization circulating tank;
- 14. flue gas condensate;
- 15. membrane separation apparatus;
- 16. concentrated solution from membrane separation;
- 17. externally discharged purified water from membrane separation;
- 18. purified water going to the ammonia washing functional area;
- 19. decarbonization functional area;
- 20. particulate washing circulating pump;
- 21. circulating pump for the decarbonization tower;
- 22. discharge pump for the decarbonization tower;
- 23. post-decarbonization tail gas;
- 24. going to the decarbonization system for ammonia addition;
- 25. ammonia washing functional area;
- 26. circulating pump-a for the ammonia washing functional area;
- 27. circulating pump-b for the ammonia washing functional area;
- 28. ammonia washing water tank;
- 29. ammonia washing water drainage;
- 30. clean flue gas;
- 31. ammonium sulfate solid-liquid separator;
- 32. ammonium sulfate drier;
- 33. ammonium sulfate packing machine;
- 34. ammonium sulfate product;
- 35. acidic desulfurization fluid;
- 36. returned desulfurization fluid;
- 37. ammonium bicarbonate solid-liquid separator;
- 38. ammonium bicarbonate drier;
- 39. ammonium bicarbonate packing machine;
- 40. ammonium bicarbonate product;
- 41. CO₂ regeneration tower;
- 42. solution heat exchanger;
- 43. reboiler;
- 44. circulating water cooler;
- 45. chilled water cooler;
- 46. CO₂ buffer tank;
- 47. CO₂ compressor;
- 48. loading into bottles or tanker;
- 49. CO₂ downstream production apparatus;
- 50. heat pump system;
- 51. steam;
- 52. condensate;
- 53. process water;
- 54. chilled water supply;
- 55. chilled water return.

### DETAILED DESCRIPTION OF PREFERRED EMBODIMENTS

Apparatus and methods for integrated ammonia-based desulfurization and decarbonization are provided. The apparatus and methods use ammonia to remove sulfur oxides and CO₂ to produce ammonium sulfate and ammonium bicarbonate fertilizers. The apparatus includes an ammonia-based desulfurization functional area, an ammonia-based decarbonization functional area, an ammonia washing functional area, an ammonium sulfate post-processing system, and an ammonium bicarbonate post-processing system. Ammonia is used as a desulfurizing agent and a decarbonizing agent. A gas enters first the desulfurization functional area for desulfurization to produce ammonium sulfate fertilizer. The desulfurized gas enters the decarbonization functional area for removal of carbon dioxide therein, to produce ammonium bicarbonate fertilizer. The decarbonized gas, that comprises free ammonia, enters the ammonia washing functional area for washing with an ammonium sulfate solution for desulfurization, and then with water. After the ammonia washing, the ammonia-containing ammonium sulfate solution and aqueous solution are returned to the desulfurization tower, where they may serve as an absorbing agent for desulfurization. The above functional areas may be combined in one tower or multiple towers. The desulfurization functional area may be divided into a plurality of sections, including a cooling and concentrating section, an absorbing section, and a particulate removing section. Each of the sections may be provided with at least one spraying layer, and a device/part is arranged between the sections to allow a gas to pass through.

In some preferred embodiments, the particulate removing section is divided into two parts, among which a first particulate removing part utilizes an ammonium sulfate-containing concentrated solution to conduct circulation spray washing, and a second particulate removing part utilizes an ammonium sulfate-containing dilute solution to conduct circulation washing. A device/part may be arranged between the two parts to allow a gas to pass through. The concentration of the concentrated ammonium sulfate solution used in the first particulate removing part may be controlled at 5-40%, preferably 10-30%, and the pH may be controlled at 3-7, preferably 3-5.5. The concentration of the dilute ammonium sulfate solution used in the second particulate removing part may be controlled at 0.02-10%, preferably 0.03-5%, and the pH may be controlled at 3-7.

In some preferred embodiments, the apparatus according to the disclosure comprises a desulfurization circulating tank comprising an oxidation chamber and an ammonia-adding chamber in fluid communication with each other, wherein the oxidation chamber is configured to allow contact and reaction between at least part of the reflux liquid from the absorption section and an oxygen-containing gas, and allow to take out at least part of the liquid phase thereof for circulation to the first particulate removing part and to the ammonia washing functional area; and the ammonia-adding chamber is configured to be in fluid communication with the oxidation chamber, allow at least part of the reflux liquid from the absorption section to mix with an ammonia absorbent, and allow to take out a liquid stream therefrom for circulation to the absorption section.

The integrated desulfurization and decarbonization method comprises successively the following steps:
1) removing part of SO₂ in a process gas by using a desulfurization circulating fluid;
2) removing part of CO₂ in the process gas by using a decarbonization circulating fluid; and
3) removing part of free ammonia in the process gas by using a desulfurization circulating fluid, and returning the desulfurization circulating fluid after absorbing the free ammonia to a desulfurization apparatus.

In some preferred embodiments, step 3) utilizes a desulfurization circulating fluid from the oxidation chamber of the desulfurization circulating tank to remove part of free ammonia in the process gas, and returns the desulfurization circulating fluid after absorbing the free ammonia to the desulfurization apparatus.

In some embodiments, step 1) and step 2) afford products including ammonium sulfate fertilizer and ammonium bicarbonate fertilizer.

In some embodiments, the CO₂ removal efficiency in step 2) may be in the range 30-98%.

In some embodiments, at least part of the decarbonization circulating fluid may be sent to an ammonium bicarbonate post-processing unit to produce ammonium bicarbonate fertilizer, or at least part of the decarbonization circulating fluid may be sent to a CO₂ regeneration unit to obtain gaseous CO₂. So-produced CO₂ may be used for one or more of beverage production, enhanced oil recovery, and welding, or for the production of one or more downstream products including urea, soda ash, sodium bicarbonate, polycarbonate, polyurethane, food-grade CO₂, CO₂ gas fertilizer, potassium bicarbonate, and the like.

In some embodiments, the method according to the disclosure further comprises, between step 2) and step 3), a step 4) of removing part of the free ammonia present in the process gas using a process water and/or, after step 3), a step 5) of further removing part of the free ammonia present in the process gas using a process water.

The desulfurization circulating fluid used herein includes a concentrated circulating fluid and an absorbing circulating fluid. In some embodiments, the concentrated circulating fluid has a pH of 1-6, preferably 2-4.5, an ammonium sulfite concentration of 0-0.2%, and an ammonium sulfate concentration of 10-60%, and the absorbing circulating fluid has a pH of 4.5-6.5, preferably 4.8-6.2, an ammonium sulfite concentration of 0.1-3%, and an ammonium sulfate concentration of 10-38%.

In some embodiments, the decarbonization circulating fluid used herein has a pH of 7-13, preferably 7.5-11, more preferably 8-9.5, an ammonium bicarbonate concentration of 3-40%, preferably 10-22%, and an NH₃/CO₂ molar ratio of 0.6-4, preferably 1.2-3, more preferably 2-2.5.

In some embodiments, the desulfurization absorption temperature is in the range of 5-55 °C, preferably 15-50°C, more preferably 20-40°C, and the decarbonization absorption temperature is in the range of 0-45°C, preferably 5-40°C, more preferably 10-30°C. A heat pump refrigeration technology may be used to provide cooling for cooling the decarbonization circulating fluid and the desulfurization circulating fluid. The temperature of the chilled water obtained by the heat pump may be in the range of 3-25°C, and preferably 5-10°C.

Power for the heat pump may include one or more of hot water, steam, and electricity. Circulating water or desalinized water may be used as a cold source. When desalinized water is used, the desalinized water after heat exchange may be sent to a low-temperature coal economizer to lower coal consumption per ton of steam.

In some embodiments, the desulfurization functional area is provided with a cooling apparatus to control the temperature of desulfurized flue gas in the range of 5-55°C, preferably 20-40°C. The ranges may meet temperature requirements for subsequent decarbonization. The cooling apparatus may be arranged on the circulating pipeline for the desulfurization circulating fluid to cool the desulfurization circulating fluid. After the cooling, the cooled desulfurization circulating fluid may further cool the desulfurized flue gas. A plurality of cooling apparatus may be provided, for example, on the circulating and absorbing pipeline in the absorbing section and the particulate removing section, preferably on the washing water pipeline in the second particulate removing part. The washing condensate may be purified through membrane separation. The concentrated solution may enter the desulfurization absorbing area, and the clean water may be used as makeup water for ammonia washing or may be used externally.

In some embodiments, the cooling apparatus may be arranged in the process gas pipeline, at the inlet, inside, or at the outlet of the desulfurization functional area. A circulating water or chilled water, individually or in combination, may be used as a cooling agent.

In some embodiments, the desulfurization circulating solution for ammonia washing may be taken from the circulating washing solution of the desulfurization tower and, after the ammonia washing, may be returned to the ammonia-based desulfurization functional area for desulfurization. The pH of the desulfurization circulating solution for ammonia washing may be controlled at 2.5-7.5, preferably 3-5.5. In some embodiments, the desulfurization circulating solution for ammonia washing may be taken from the oxidation chamber of the desulfurization circulating tank.

In some embodiments, the pH of the washing process water used in the ammonia washing functional area may be controlled at 3-7. At least part of the resulting water solution after the ammonia washing with the process water may enter, as makeup water, into the circulating fluid for the second particulate removing part of the desulfurization tower. Thus, the ammonium sulfate concentration in the circulating fluid can be controlled at 0-5%, preferably 0.02-2%.

In some embodiments, part of the water washing circulating fluid in the second particulate removing part may be pumped out and sent to a purification membrane separation apparatus. The produced purified water may be used as makeup water for the ammonia washing functional area to control the ammonia concentration in the washing water and in turn the concentration of the dilute ammonium sulfate solution for desulfurization section. The concentrated solution from the membrane separation apparatus may enter the desulfurization absorption section.

In some embodiments, the decarbonization functional area and the ammonia washing functional area may utilize one or a combination of a sprayer absorption, a plate absorption, a packed column absorption, and a floating-valve absorption column.

In some embodiments, the ammonium sulfate slurry produced from desulfurization may enter the ammonium sulfate post processing system. After solid-liquid separation, wet ammonium sulfate may be dried and packed into an ammonium sulfate product. Alternatively, a wet ammonium sulfate product may be output directly. Solution from the solid-liquid separator may be returned to the desulfurization functional area. If an ammonium sulfate solution is produced, the solution should be evaporated and crystallized to form an ammonium sulfate slurry before entering the solid-liquid separation apparatus.

In some embodiments, the ammonium bicarbonate slurry produced from the decarbonization tower may enter a solid-liquid separation apparatus. The resultant liquid may be returned to the decarbonization functional area. The wet ammonium bicarbonate may be dried and packed into a product. Alternatively, a wet ammonium bicarbonate product may be output directly. In some embodiments, at least part of the ammonium bicarbonate produced from the decarbonization may be heated to produce CO₂ and an ammonia solution, and the ammonia solution may be returned to the decarbonization functional area for further use.

In some embodiments, main parameters of the desulfurization functional area may include:
- Empty tower gas velocity controlled at 0.5-5 m/s, preferably 2-4 m/s;
- Circulating fluid spraying density of each layer at 4-100 m³/m²·h, preferably 8-80 m³/m²·h;
- Circulating fluid temperature controlled at 5-55°C, preferably 20-40°C;
- Circulating fluid pH controlled at 1-7.

In some embodiments, main parameters of the decarbonization functional area may include:
- Empty tower gas velocity controlled at 0.1-5 m/s;
- Temperature controlled at 5-40°C, preferably 10-30°C;
- Circulating fluid pH controlled at 7-11.

In some embodiments, main parameters of the ammonia washing functional area may include:
- Empty tower gas velocity controlled at 0.25-5 m/s;
- Temperature controlled at 0-50°C, preferably 3-40°C;
- Circulating fluid pH controlled at 3-10.

In some embodiments, a strong acid, such as sulfuric acid, nitric acid, or hydrochloric acid, may be added into the desulfurization functional area and/or the ammonia washing functional area to adjust the pH of the circulating fluid.

In some embodiments, the apparatus further includes a heat pump system, to provide cooling capacity for cooling the decarbonization circulating fluid and the desulfurization circulating fluid by using a heat pump refrigeration technology. The temperature of the chilled water obtained by the heat pump may be in the range of 3-25°C, preferably 5-10°C. The chilled water supply/return pipelines are connected with the individual chilling heat exchangers.

In some embodiments, the apparatus further includes a CO₂ regeneration tower in which regeneration of decarbonization circulating fluid proceeds. CO₂ regeneration tower operating parameters may include:
- At tower bottom, a regeneration temperature in the range of 90-150°C, preferably 100-130°C;
- At tower top, a regeneration temperature in the range of 6-100°C, preferably 70-90°C ;
- At tower bottom, a regeneration pressure in the range of 0.2-0.7 MPa, preferably 0.3-0.5 MPa;
- A regeneration tower gas velocity in the range of 0.2-3 m/s, preferably 0.3-2 m/s.

In some embodiments, the apparatus further includes one or more of a solution heat exchanger, a reboiler, a circulating water cooler, a chilled water cooler, a CO₂ buffer tank, and a CO₂ compressor.

In some embodiments, the ammonium bicarbonate solution/slurry from the decarbonization functional area can be sent to a CO₂ regeneration unit to generate CO₂ and an ammonia solution.

In some embodiments, after gas-liquid separation, the gaseous CO₂ obtained from the regeneration may be used for production of downstream products, for example, urea, soda ash, sodium bicarbonate, polycarbonate, food-grade CO₂, CO₂ gas fertilizer, potassium bicarbonate, or the like, in enhanced oil recovery, beverage production, or welding, or for marine sequestration or underground sequestration. The separated liquid may be returned to the CO₂ regeneration tower.

The embodiments of the invention integrates decarbonization and desulfurization processes. The embodiments of the invention use an acidic desulfurization circulating fluid to wash ammonia so as to achieve a high ammonia washing efficiency, thereby addressing ammonia slip issue in the decarbonization process. The process is simpler, the investment and operation costs are low, ammonium sulfate and ammonium bicarbonate fertilizers are co-produced, and part of the CO₂ can be injected back to underground for sequestration. Thus, ammonium bicarbonate output, the amount of sequestered CO₂, and the output of CO₂ downstream products may be flexibly adjusted.

According to the embodiments of the invention, by-product ammonia may be used in the process, thereby realizing treating wastes with wastes and a circular economy. Comparison between (a) the embodiments of the invention; and (b) the calcium-based desulfurization/sodium-based desulfurization method + amine-based decarbonization + carbon sequestration device:
- The inventive apparatus occupy a smaller land area and may flexibly adjust the amount of sequestered CO₂;
- The inventions are simple in process and can more flexibly adjust the output of byproducts, wherein CO₂ may be used for production of urea, sodium bicarbonate, soda ash, food-grade CO₂, polycarbonate, methanol, synthesis gas, and polyurethane, and in enhanced oil recovery, welding, gas fertilizer, and the like. The total demand in China is close to 150 million ton/year;
- Decarbonization with amines after calcium-based desulfurization may require the provision of an alkaline deep desulfurization device, and the desulfurization capital cost may be increased by 60-80% over that of the existing desulfurization device. The capital cost for conventional ammonia-based desulfurization may be about 85-95% of that for the calcium-based desulfurization, and the capital cost for ammonia-based decarbonization may be about 60% of that for amine-based decarbonization. Integrated desulfurization and decarbonization may further reduce the capital cost by about 10-20%. Therefore, the capital cost of the integrated ammonia-based desulfurization and decarbonization technology may be 40-50% lower than that for the calcium-based desulfurization + sodium-based desulfurization + amine-based decarbonization. Moreover, the inventions do not generate any wastewater or waste residues.

The operating cost of the integrated ammonia-based desulfurization and decarbonization technology may be 50-60% lower than that of the calcium-based desulfurization + alkaline desulfurization + amine-based decarbonization.

Comparison between (a) the integrated ammonia-based desulfurization and decarbonization technology and (b) the calcium-based desulfurization + alkaline desulfurization + amine-based decarbonization technology

| Technology | Calcium-based desulfurization + alkaline washing + amine-based decarbonization | Integrated ammonia-based desulfurization and decarbonization |
|---|---|---|
| Raw materials for desulfurization and decarbonization | Limestone powder CaCO₃/ liquid caustic soda + ethanolamine | Liquid ammonia or aqueous ammonia (NH₃) |
| Byproducts of desulfurization and decarbonization | Gypsum (solid waste)/waste alkali | Ammonium sulfate + ammonium bicarbonate (sold as fertilizers) |
| Wastewater | Yes, about 0.35 t/10⁴ kw | No |
| Waste residues | Yes | No |
| Waste gas | Production of CO₂ from desulfurization at 0.7 t/tSO₂ | No |
| Capital cost | 1A | 0.5-0.6A |
| Operating cost | 1B-2B | 0.4-0.5B |
| Occupied Land area | Large | Small |
| Supporting requirements | High, requiring the marine or deep geological structure layer for carbon sequestration | Low, and the product mix can be flexibly adjusted |

Technical metrics of the apparatus and methods may include:
- Decarbonization efficiency not lower than 50%, and the content of CO₂ (including fine particulates) in the flue gas at the outlet of the decarbonization tower controlled at ≤ 6%
- SO₂ content at the outlet ≤5 mg/Nm³
- Ammonia recovery (fraction or percentage of ammonia added to a gas cleaning process that is subsequently captured and extracted from the process) ≥98%, and ammonia slip at the process outlet ≤10 ppm
- Power consumption ≤250 kW·h/t CO₂
- Steam consumption ≤1.2 t/t CO₂

Unless stated otherwise, %-concentrations, as used herein, are volume percentages for gas and weight percentages for liquid.

Apparatus and methods for integrated ammonia-based desulfurization and decarbonization according to some embodiments of the invention will now be described with reference to the accompanying drawings.

FIG. 1 is an illustrative block flow diagram in accordance with an embodiment of the inventive process.

FIG. 2 and FIG. 3 show an integrated ammonia-based desulfurization and decarbonization apparatus according to some embodiments of the invention. Referring to FIG. 2, process gas 1 containing sulfur oxides and CO₂ may enter desulfurization functional area 2. Desulfurization circulating pump-a 5 may be used for spraying and circulation. This may cool the process gas and concentrate the ammonium sulfate solution into a slurry. The ammonium sulfate slurry, which may include solid precipitate, may be sent via ammonium sulfate discharge pump 6 to ammonium sulfate solid-liquid separator 31. The solids may be dried in ammonium sulfate drier 32, and packed in ammonium sulfate packing machine 33 to obtain ammonium sulfate product 34. Circulating pump-b 3 of desulfurization functional area 2 and desulfurization circulating tank 13 may be used for absorption spraying and circulation to absorb sulfur oxides (sulfur dioxide and sulfur trioxide) in the process gas. Desulfurization heat exchanger-a 4 may be used to control the desulfurization temperature. Desulfurization circulating pump-c 10 and desulfurization circulating water tank 9 may be used for washing spraying and circulation. Desulfurization heat exchanger-b 11 may be used to control the washing temperature and the temperature of post-desulfurization tail gas 12. Flue gas condensate 14 may be processed by membrane separation apparatus 15. Obtained concentrated solution from membrane separation 16 may be returned to desulfurization functional area 2 for use. Part 18 of the purified water may be used as makeup water for the ammonia washing tower. Part 17 of the purified water may be externally discharged. Ammonia 8 may be metered and then sent to the ammonia adding chamber of the desulfurization circulating tank 13 as ammonia addition. Oxidation air 7 may be sent to the oxidation chamber of the desulfurization circulating tank 13 for oxidizing the desulfurization circulating fluid.

Post-desulfurization tail gas 12 may enter a decarbonization functional area 19. Decarbonization circulating pump 21 may be used for absorption spraying and circulation, and a solution/slurry may be sent by decarbonization discharge pump 22 to ammonium bicarbonate solid-liquid separator 37. The solids may be dried in ammonium bicarbonate drier 38, and packed in ammonium bicarbonate packing machine 39 to obtain ammonium bicarbonate product 40. Ammonia 24 is metered and then sent to the decarbonization tower 19 as ammonia addition.

Post-decarbonization tail gas 23 may enter an ammonia washing functional area 25. Circulating pump-a 26 for the ammonia washing tower may be used for first-stage washing. A first-stage washing fluid may come from acidic desulfurization fluid 35 of particulate washing circulating pump of the desulfurization circulating tank 13 and may be added continuously to the bottom of the ammonia washing tower 25. Preferably, the acidic desulfurization fluid 35 comes from the particulate washing circulating pump, which is connected to the oxidation chamber of the desulfurization circulating tank 13. Desulfurization fluid 36 that has absorbed ammonia may be returned to the desulfurization circulating tank 13, preferably to the oxidation chamber. Circulating pump-b 27 for the ammonia washing functional area and circulating water tank 28 for the ammonia washing functional area may be used for second stage washing. A second stage washing fluid may come from purified water 18. After the washing, the fluid may be returned to desulfurization functional area 2. After the washing, clean flue gas 30 may be discharged.

Referring to FIG. 3, decarbonization circulating pump 22 may output a part of the solution to heat exchanger 42 for heat exchange. The solution may then enter CO₂ regeneration tower 41. After the tower bottom is heated by steam at reboiler 43, a CO₂ gas may be collected at the top of the tower. The gas may be subjected to two-stage cooling by circulating water cooler 44 and chilled water cooler 45. The gas may then be sent to CO₂ buffer tank 46, and after a certain period of buffering, may be compressed by CO₂ compressor 47. Subsequently, a part of the CO₂ may be sent to downstream production apparatus 49 for production of downstream products including urea, soda ash, and the like. Another part may be loaded into bottles or into a tanker 48. Condensate may be taken out from the bottom of the reboiler 43.

Process water 53 may be added to the upper part of CO₂ regeneration tower 41.

The apparatus may further include heat pump system 50. The heat pump system may produce chilled water. Chilled water supply 54 may be sent to heat exchangers including chilled water cooler 45, desulfurization heat exchanger-a 5, and desulfurization heat exchanger-b 3 for cooling one or more of the process gas (flue gas), CO₂ gas, and circulating fluids. Chilled water return 55 may be returned to heat pump system 50.

The disclosure provides the following embodiments:
Embodiment 1. An integrated desulfurization and decarbonization method using ammonia to remove sulfur oxides and CO₂ in process gas, the method comprising:
   in order:
   1) removing, using a desulfurization circulating fluid, part of SO₂ from the process gas;
   2) removing, using a decarbonization circulating fluid, part of CO₂ from the process gas; and
   3) removing, using a desulfurization circulating fluid from a desulfurization circulating tank, preferably from an oxidation chamber of the desulfurization circulating tank, part of free ammonia from the process gas; and returning the desulfurization circulating fluid having absorbed the free ammonia to a desulfurization apparatus.
Embodiment 2. The method of Embodiment 1, having at least one of the following features:
   - products of the method include ammonium sulfate fertilizer and ammonium bicarbonate fertilizer;
   - a removing rate of CO₂ in step 2) ranges from 30 to 98%;
   - the method further comprises:
      producing ammonium bicarbonate fertilizer, in an ammonium bicarbonate posttreatment unit, from part of the decarbonization circulating fluid; and/or
      feeding part of the decarbonization circulating fluid to a CO₂ regeneration system to conduct regeneration, thereby affording gaseous CO₂, wherein the regeneration is performed in a CO₂ regeneration system, in which the operation parameters preferably include: an operating temperature at a tower bottom in a range from 90-150°C, preferably from 100-130°C, an operating temperature at a tower top in a range from 6-100°C, preferably from 70-90°C, a regeneration pressure at the tower bottom in a range from 0.2-0.7 MPa, preferably from 0.3-0.5 MPa, and a gas velocity in the tower in a range from 0.2-3 m/s, preferably from 0.3-2 m/s;
   - the method further comprises producing, from gaseous CO₂, a downstream product, preferably including urea, soda ash, sodium bicarbonate, polycarbonate, food grade CO₂, CO₂ gas fertilizer, potassium bicarbonate; using the gaseous CO₂ in enhanced oil recovery; and/or sequestering the gaseous CO₂ in marine or underground.
Embodiment 3. The method of Embodiment 1 further comprising:
   between step 2) and step 3), 4) removing, using process water, free ammonia from the process gas; and/or,
   after step 3), 5) removing, using process water, free ammonia from the process gas.
Embodiment 4. The method of Embodiment 1, having at least one of the following features:
   - the desulfurization circulating fluid includes a concentrated circulating fluid and an absorbing circulating fluid;
      the concentrated circulating fluid has:
         a pH of 1-6, preferably 2-4.5;
         ammonium sulfite at a concentration of 0-0.2%; and
         ammonium sulfate at a concentration of 10-60%; and
      the absorbing circulating fluid has:
         a pH of 4.5-6.5, preferably 4.8-6.2;
         ammonium sulfite at a concentration of 0.1-3%; and
         ammonium sulfate at a concentration of 10-38%;
   - the decarbonization circulating fluid has:
      a pH of 7-13, preferably 7.5-11, more preferably 8-9.5;
      ammonium bicarbonate at a concentration of 3-40%, preferably 10-22%; and
      an NH₃/CO₂ molar ratio of 0.6-4, preferably 1.2-3, more preferably 2-2.5;
   - a temperature for the desulfurization absorbing is in a range from 5-55 °C, preferably 15-50 °C, more preferably 20-40 °C; and
   - a temperature for the decarbonization absorbing is in a range from 0-45 °C, preferably 5-40 °C, more preferably 10-30 °C.
Embodiment 5. Apparatus for implementing the method of any one of Embodiments 1 to 4, wherein the apparatus includes an ammonia-based desulfurization functional area, an ammonia-based decarbonization functional area, an ammonia washing functional area, an ammonium sulfate post-processing system, and an ammonium bicarbonate post-processing system; ammonia is used as a desulfurizing agent and a decarbonizing agent; a process gas enters first the desulfurization functional area for desulfurization to produce ammonium sulfate fertilizer; the desulfurized process gas enters the decarbonization functional area for removal of carbon dioxide therein, to produce an ammonium bicarbonate solution/slurry; the decarbonized process gas, that comprises free ammonia, enters the ammonia washing functional area for washing with an desulfurization circulating fluid and then with process water; after the washing, the ammonia-containing desulfurization circulating fluid and process water solution are returned to the desulfurization functional area, where they serve as an absorbing agent for desulfurization, and part of ammonium sulfate-containing ammonium bicarbonate solution is returned to the desulfurization functional area.
Embodiment 6. The apparatus of Embodiment 5, having at least one of the following features:
   - the apparatus comprises a desulfurization circulating tank comprising an oxidation chamber and an ammonia-adding chamber in fluid communication with each other, wherein the oxidation chamber is configured to allow contact and reaction between at least part of the reflux liquid from the absorption section and an oxygen-containing gas, and allow to take out at least part of the liquid phase thereof for circulation to the particulate removing section and to the ammonia washing functional area; and the ammonia-adding chamber is configured to be in fluid communication with the oxidation chamber, allow at least part of the reflux liquid from the absorption section to mix with an ammonia absorbent, and allow to take out a liquid stream therefrom for circulation to the absorption section;
   - the ammonia washing functional area is further configured to wash the process gas with a process water before washing the process gas with the desulfurization circulating fluid; and the ammonia-based desulfurization functional area, the ammonia-based decarbonization functional area, and the ammonia washing functional area are disposed in one or more towers.
Embodiment 7. The apparatus of Embodiment 5 wherein the desulfurization functional area is divided into a plurality of sections including a cooling and concentrating section, an absorbing section, and a particulate removing section, with each section being provided with at least one spraying layer, and with a device/component allowing gas to pass through being provided between any two adjacent sections,
   preferably, the particulate removing section comprises:
   a first particulate removing part configured to wash with concentrated, circulating ammonium sulfate-containing solution; and
   a second particulate removing part configured to wash with dilute, circulating ammonium sulfate-containing solution,
   with a device/component allowing gas to pass through being provided between the two parts;
   the first particulate removing part utilizing the concentrated ammonium sulfate-containing solution having an ammonium sulfate concentration in a range of 10-38%, preferably 12-30%, and a pH in a range of 2.5-7.5, preferably 3-5.5; and
   the second particulate removing part utilizing the dilute ammonium sulfate-containing solution having an ammonium sulfate concentration in a range of 0-5%, preferably 0.02-2%, and a pH in a range of 3-7;
   preferably, the desulfurization functional area includes a cooling apparatus that is configured to maintain a temperature of process gas after desulfurization in a range of 5-55°C, preferably 15-50°C, and more preferably 20-40°C,
   preferably, the cooling apparatus is arranged on a circulating pipeline configured to transport desulfurization circulating fluid, to cool the desulfurization circulating fluid and in turn the post-desulfurization process gas; alternatively, on a process gas/flue gas conduit in the desulfurization functional area, to directly cool the process gas,
   with a circulate water and/or a chilled water being used as a coolant in the cooling apparatus.
Embodiment 8. The apparatus of Embodiment 5 wherein the decarbonization functional area includes a cooling apparatus that is configured to maintain a temperature of process gas after decarbonization in a range of 0-45°C, preferably 5-40°C, and more preferably 10-30°C.
Embodiment 9. The apparatus of Embodiment 5, having at least one of the following features:
   - the desulfurization circulating fluid used for ammonia washing comes from the ammonium sulfate-containing washing fluid used for the particulate removing section of the ammonia-based desulfurization functional area, and the desulfurization circulating fluid, after having been used in the ammonia washing, is returned to the ammonia-based desulfurization functional area for desulfurization, with a pH of the ammonium sulfate-containing washing fluid being controlled at 2.5-7.5;
   - the desulfurization circulating fluid used for ammonia washing comes from the ammonium sulfate-containing washing fluid used for the absorption section of the ammonia-based desulfurization functional area, and the desulfurization circulating fluid, after having been used in the ammonia washing, is returned to the absorption section of the desulfurization functional area for desulfurization, with a pH of the ammonium sulfate-containing washing fluid being controlled at 3-7;
   - part of a resulting water solution after the ammonia washing enters, as makeup water, the circulating fluid for the particulate removing section of the desulfurization functional area, with a concentration of ammonia in the ammonia washing circulating fluid being controlled at 0-5%, preferably 0-1%.
Embodiment 10. The apparatus of Embodiment 7 wherein part of the dilute ammonium sulfate washing solution is pumped out and sent to a purification membrane separation apparatus, with the produced purified water being used as makeup water for the ammonia washing functional area to control the ammonia concentration in the washing water and the concentration of the dilute ammonium sulfate solution for desulfurization washing, the excess being discharged from the apparatus for external use, and the concentrated solution entering the desulfurization absorption section.
Embodiment 11. The apparatus of Embodiment 5, having at least one of the following features:
   - each of the decarbonization functional area, the decarbonization functional area and the ammonia washing functional area utilizes one or a combination of a sprayer absorption, a plate absorption, a packed column absorption, and a floating-valve absorption column;
   - the ammonium sulfate slurry produced from the desulfurization is subjected to solid-liquid separation, drying and packing into an ammonium sulfate product, alternatively, a wet ammonium sulfate product is output directly;
   - the ammonium bicarbonate slurry produced from the decarbonization is subjected to solid-liquid separation, with the separated solution being returned to the decarbonization unit, with the separated wet ammonium bicarbonate being dried and packed into a product, alternatively, being output directly as a wet ammonium bicarbonate product;
   - part or all of the ammonium bicarbonate solution/slurry produced from the decarbonization is heated to produce CO₂ and an ammonia solution, and the ammonia solution is returned to the decarbonization functional area for further use;
   - the CO₂ is used for the production of downstream products, in enhanced oil recovery, in beverage production, or for underground sequestration;
   - the ammonia-based desulfurization functional area is configured to operate under the following process parameters:
      1) an empty tower gas velocity at 0.5-5 m/s, preferably 2-4 m/s;
      2) a circulating fluid spraying density for each spray layer at 4-100 m³/m²-h, preferably 8-80 m³/m²-h;
      3) a circulating fluid temperature at 5-55°C, preferably 20-40°C; and
      4) a circulating fluid pH at 1-7;
   - the decarbonization functional areas is configured to operate under the following process parameters:
      1) an empty tower gas velocity at 0.1-5 m/s;
      2) a temperature at 5-40°C, preferably 10-30°C; and
      3) a circulating fluid pH at 7-11;
   - the ammonia washing functional area is configured to operate under the following process parameters:
      1) an empty tower gas velocity at 0.25-5 m/s;
      2) a temperature at 0-50°C, preferably 3-40°C; and
      3) a circulating fluid pH at 3-10;
   - the apparatus further comprises a heat pump system that is configured to provide a chilled water required by cooling, a temperature of the chilled water from the heat pump system ranging from 3 to 25°C, preferably from 5 to 10 °C;
   - the apparatus further comprises a CO₂ regeneration tower that is configured to conduct the regeneration of the decarbonization circulating fluid under the following process parameters:
      a temperature for the regeneration at a bottom of the tower at 90-150°C, preferably 100-130 °C;
      a temperature for the regeneration at a top of the tower at 6-100°C, preferably 70-90°C;
      a pressure for the regeneration at a bottom of the tower at 0.2-0.7 MPa, preferably 0.3-0.5 MPa; and
      a gas velocity in the regeneration tower at 0.2-3 m/s, preferably 0.3-2 m/s;
         preferably, the apparatus further comprises a process water inlet that is disposed on an upper part of the regeneration tower;
         preferably, the gaseous CO₂ obtained from the regeneration tower is used for production of downstream products, including urea, soda ash, sodium bicarbonate, polycarbonate, food-grade CO₂, CO₂ gas fertilizer, potassium bicarbonate, in enhanced oil recovery, beverage production, or welding, or for marine sequestration or underground sequestration;
         preferably, the apparatus further comprises a solution heat exchanger; a reboiler; a circulating water cooler; a chilled water cooler; a CO₂ buffer tank, and a CO₂ compressor, wherein:
            the decarbonization circulating pump delivers a fraction of its outlet solution, via the solution heat exchanger, to a CO₂ regeneration tower, from the top of which gaseous CO₂ is withdrawn, cooled with the coolers, then sent to the CO₂ buffer tank, and then delivered outside after having been compressed by the CO₂ compressor.

### Examples

The present invention will be described in detail with reference to examples, which do not limit the scope of the present invention.

### Example 1

A coal-fired boiler flue gas (process gas) containing sulfur oxides and CO₂ was introduced into an integrated desulfurization and decarbonization apparatus. FIG. 2 shows the process flow diagram. The apparatus included desulfurization functional area 2, decarbonization functional area 19, and ammonia washing functional area 25.

Process gas 1, which contained sulfur oxides and CO₂, entered desulfurization functional area 2. Desulfurization circulating pump-a 5 was used for spraying and circulation, by which the process gas was cooled while the ammonium sulfate solution was concentrated. The concentrated ammonium sulfate slurry with solid precipitates was sent via ammonium sulfate discharge pump 6 to ammonium sulfate solid-liquid separator 31. The solid was dried in ammonium sulfate dryer 32, and packed in ammonium sulfate packing machine 33 to obtain ammonium sulfate product 34. Circulating pump-b 3 in desulfurization functional area 2 and desulfurization circulating tank 13 (ammonia adding chamber) were used for absorption spraying and circulation to absorb sulfur oxides (sulfur dioxide and sulfur trioxide) in the process gas, and desulfurization heat exchanger-a 4 was used to control the desulfurization temperature. Desulfurization circulating pump-c 10 and desulfurization circulating water tank 9 were used for washing spraying and circulation, and desulfurization heat exchanger-b 11 was used to control the washing temperature and the temperature of the post-desulfurization tail gas 12. Flue gas condensate 14 was processed by membrane separation apparatus 15. Concentrated solution obtained from membrane separation 16 was returned to desulfurization functional area 2. Part of the purified water 18 was used as the makeup water for the ammonia washing tower, and the rest of the purified water 17 was discharged. Ammonia 8 was metered and provided to ammonia adding chamber of the desulfurization circulating tank 13 for ammonia addition. Oxidation air 7 was provided to oxidation chamber of the desulfurization circulating tank 13 for oxidizing the solution.

Post-desulfurization tail gas 12 entered decarbonization functional area 19. Decarbonization circulating pump 21 was used for absorption spraying and circulation, and the slurry was sent by decarbonization discharge pump 22 to ammonium bicarbonate solid-liquid separator 37. The solid was dried in ammonium bicarbonate drier 38, and packed in ammonium bicarbonate packing machine 39 to obtain ammonium bicarbonate product 40. Ammonia 24 was metered and provided to decarbonization tower 19 for ammonia addition. Part of the ammonium sulfate-containing ammonium bicarbonate solution was returned to the desulfurization functional area.

Post-decarbonization tail gas 23 entered ammonia washing functional area 25. Ammonia washing tower circulating pump-a 26 was used for first-stage washing. The first-stage washing fluid coming from acidic desulfurization fluid 35 of the particulate washing circulating pump connected to the oxidation chamber of the desulfurization circulating tank 13 was continuously added to the ammonia washing tower 25. Desulfurization fluid 36, having absorbed ammonia, was returned to desulfurization circulating tank 13. Circulating pump-b 27 for the ammonia washing functional area and circulating water tank 28 for the ammonia washing functional area were used for second stage washing. The second stage washing fluid came from purified water 18. After the washing, the liquid was returned to desulfurization functional area 2. After the washing, the clean flue gas 30 was discharged.

99.6% liquid ammonia was used as an absorbing agent for desulfurization and decarbonization. Process gas (boiler flue gas) parameters are given in the table below:

| No. | Item | Value |
|---|---|---|
| 1 | Flow rate, Nm³/h | 560000 |
| 2 | Temperature, °C | 160 |
| 3 | SO₂ content, mg/Nm³ | 4500 |
| 4 | CO₂ content, v% | 12 |
| 5 | H₂O content, v% | 5.48 |
| 6 | O₂ content, v% | 8.65 |

The main parameters of the desulfurization system are given in the table below:

| No. | Item | Value |
|---|---|---|
| 1 | Gas flow rate at outlet of desulfurization tower, Nm³/h | 528326 |
| 2 | Temperature at outlet of desulfurization tower, °C | 18 |
| 3 | SO₂ content at outlet of desulfurization tower, ppm | <5 |
| 4 | CO₂ content at outlet of desulfurization tower, v% | 12.7 |
| 5 | H₂O content at outlet of desulfurization tower, v% | 2.0 |
| 6 | Output of byproduct ammonium sulfate, t/h | 5.24 |
| 7 | Desulfurization efficiency, % | 99.9 |
| 8 | Consumption of 99.6% liquid ammonia, t/h | 1.34 |

The main parameters of the decarbonization tower are given in the table below:

| No. | Item | Value |
|---|---|---|
| 1 | Gas flow rate at outlet of decarbonization tower, Nm³/h | 468360 |
| 2 | CO₂ content at outlet of decarbonization tower, v% | 1.4 |
| 3 | NH₃ content at outlet of decarbonization tower, ppm | 900 |
| 4 | Decarbonization efficiency, % | 90 |
| 5 | Output of byproduct ammonium bicarbonate, t/h | 221.9 |
| 6 | Consumption of 99.6% liquid ammonia, t/h | 46.0 |

The main parameters of the tail gas after treatment by the ammonia washing tower are given in the table below:

| No. | Item | Value |
|---|---|---|
| 1 | Gas flow rate at outlet of ammonia washing tower, Nm³/h | 467940 |
| 2 | CO₂ content at outlet of ammonia washing tower, v% | 1.4 |
| 3 | NH₃ content at outlet of ammonia washing tower, ppm | <3 |
| 4 | SO₂ content at outlet of ammonia washing tower, ppm | <2 |

### EXAMPLE 2:

A coal-fired boiler flue gas (process gas) containing sulfur oxides and CO₂ was entered an integrated desulfurization and decarbonization apparatus. FIG. 2 and FIG. 3 show the process flow diagram. The apparatus shown in FIG. 2 included desulfurization functional area 2, decarbonization functional area 19, and ammonia washing functional area 25.

Process gas 1, which contained sulfur oxides and CO₂, entered desulfurization functional area 2. Desulfurization circulating pump-a 5 was used for spraying and circulation, by which the process gas was cooled while the ammonium sulfate solution was concentrated. The concentrated ammonium sulfate slurry with solid precipitates was sent via ammonium sulfate discharge pump 6 to ammonium sulfate solid-liquid separator 31. The solid was dried in ammonium sulfate dryer 32, and packed in ammonium sulfate packing machine 33 to obtain ammonium sulfate product 34. Circulating pump-b 3 in the desulfurization functional area 2 and desulfurization circulating tank 13 were used for absorption spraying and circulation to absorb sulfur oxides (sulfur dioxide and sulfur trioxide) in the process gas, and desulfurization heat exchanger-a 4 was used to control the desulfurization temperature. Desulfurization circulating pump-c 10 and desulfurization circulating water tank 9 were used for washing spraying and circulation, and desulfurization heat exchanger-b 11 was used to control the washing temperature and the temperature of the post-desulfurization tail gas 12. Flue gas condensate 14 was processed by membrane separation apparatus 15. Concentrated solution obtained from membrane separation 16 was returned to desulfurization functional area 2. Part of the purified water 18 was used as the makeup water for the ammonia washing tower, and the rest of the purified water 17 was discharged. Ammonia 8 was metered and provided to ammonia adding chamber of the desulfurization circulating tank 13 for ammonia addition. Oxidation air 7 was provided to oxidation chamber of the desulfurization circulating tank 13 for oxidizing the solution.

Post-desulfurization tail gas 12 entered decarbonization functional area 19. Decarbonization circulating pump 21 was used for absorption spraying and circulation, and a slurry was sent by decarbonization discharge pump 22 to ammonium bicarbonate solid-liquid separator 37. The solid was dried in ammonium bicarbonate drier 38, and packed in ammonium bicarbonate packing machine 39 to obtain ammonium bicarbonate product 40. Ammonia 24 was metered and then provided to decarbonization tower 19 as ammonia addition. Part of the ammonium sulfate-containing ammonium bicarbonate solution was returned to the desulfurization functional area.

Post-decarbonization tail gas 23 entered ammonia washing functional area 25. Circulating pump-a 26 for the ammonia washing tower was used for first stage washing. The first stage washing fluid coming from acidic desulfurization fluid 35 of the ammonia-based desulfurization functional area was continuously added to the ammonia washing tower 25. Desulfurization fluid 36 having absorbed ammonia was returned to desulfurization circulating tank 13. Circulating pump-b 27 for the ammonia washing functional area and the circulating water tank 28 for the ammonia washing functional area were used for second stage washing. The second stage washing fluid came from purified water 18, and after the washing, the liquid was returned to desulfurization functional area 2. After the washing, clean flue gas 30 was discharged.

The apparatus further included CO₂ regeneration tower 41 in which the decarbonization circulating fluid was regenerated. Operating parameters of CO₂ regeneration tower 41 were: 100-130°C at tower bottom, 60-90°C at tower top, an operating pressure of 0.3-0.4 MPa at tower bottom, and a gas velocity of 0.6-0.8 m/s.

The apparatus further included solution heat exchanger 42, reboiler 43, circulating water cooler 44, chilled water cooler 45, CO₂ buffer tank 46, and CO₂ compressor 47.

Part of the solution extracted at the outlet of the decarbonization circulating pump 22 was sent to the ammonium bicarbonate post-processing apparatus (37-39) to obtain ammonium bicarbonate product 40, and the rest of the solution was sent to solution heat exchanger 42 before entering CO₂ regeneration tower 41. Part of the solution at the tower bottom was heated by steam in reboiler 43, and CO₂ gas was collected at the top of the tower. The gas was cooled in two-stage cooling by circulating water cooler 44 and chilled water cooler 45, before being sent to the CO₂ buffer tank 46. After having been buffered for a period of time, CO₂ from the buffer tank was compressed by CO₂ compressor 47, and subsequently 10% thereof was sent to CO₂ downstream production apparatus 49 for production of polycarbonate, 5% was loaded into bottles or into tanker 48, and 85% was sent for sequestration.

Condensate was taken out from the bottom of reboiler 43.

Process water 53 was added to the upper part of CO₂ regeneration tower 41.

The apparatus further included heat pump system 50. The heat pump system produced chilled water. Chilled water supply 54 was sent to heat exchangers including chilled water cooler 45, desulfurization heat exchanger-a, and desulfurization heat exchanger-b for the cooling of CO₂ gas and circulating fluids. Chilled water return 55 was returned to heat pump system 50.

99.6% liquid ammonia was used as an absorbing agent for desulfurization and decarbonization for a 600 MW unit. Process gas (boiler flue gas) parameters are given in the table below:

| No. | Item | Value |
|---|---|---|
| 1 | Flue gas flow rate, Nm³/h | 2100000 |
| 2 | Temperature, °C | 150 |
| 3 | SO₂ content, mg/Nm³ | 7000 |
| 4 | CO₂ content, v% | 12 |
| 5 | H₂O content, v% | 6.1 |
| 6 | O₂ content, v% | 5.9 |

The main parameters of the desulfurization system are given in the table below:

| No. | Item | Value |
|---|---|---|
| 1 | Gas flow rate at outlet of desulfurization tower, Nm³/h | 1923557 |
| 2 | Temperature at outlet of desulfurization tower, °C | 18 |
| 3 | SO₂ content at outlet of desulfurization tower, ppm | <10 |
| 4 | CO₂ content at outlet of desulfurization tower, v% | 13.1 |
| 5 | H₂O content at outlet of desulfurization tower, v% | 2.0 |
| 6 | Output of byproduct ammonium sulfate, t/h | 30.6 |
| 7 | Desulfurization efficiency, % | 99.9 |
| 8 | Consumption of 99.6% liquid ammonia, t/h | 7.8 |

The main parameters of the decarbonization tower are given in the table below:

| No. | Item | Value |
|---|---|---|
| 1 | Gas flow rate at outlet of decarbonization tower, Nm³/h | 1698128 |
| 2 | CO₂ content at outlet of decarbonization tower, v% | 1.48 |
| 3 | NH₃ content at outlet of decarbonization tower, ppm | 800 |
| 4 | Decarbonization efficiency, % | 90 |
| 5 | Output of byproduct ammonium bicarbonate, t/h | 83.3 |
| 6 | Consumption of 99.6% liquid ammonia, t/h | 17.3 |

The main parameters of the tail gas after treatment by the ammonia washing tower are given in the table below:

| No. | Item | Value |
|---|---|---|
| 1 | Gas flow rate at outlet of ammonia washing tower, Nm³/h | 1696783 |
| 2 | CO₂ content at outlet of ammonia washing tower, v% | 1.49 |
| 3 | NH₃ content at outlet of ammonia washing tower, ppm | <8 |
| 4 | SO₂ content at outlet of ammonia washing tower, ppm | <2 |

The main parameters of the CO₂ gas after regeneration by the CO₂ regeneration tower and the two-stage cooling are given in the table below:

| No. | Item | Value |
|---|---|---|
| 1 | Gas flow rate, Nm³/h | 204313 |
| 2 | CO₂ content, v% | 99.9 |
| 3 | NH₃ content in the gas, ppm | <20 |
| 4 | Water content in the gas, ppm | <500 |
| 5 | Gas pressure, MPa | 0.3 |

## Claims

1. An integrated desulfurization and decarbonization method using ammonia to remove sulfur oxides and CO₂ in process gas, the method comprising:
in order:
1) removing, using a desulfurization circulating fluid, SO₂ from the process gas;
2) removing, using a decarbonization circulating fluid, CO₂ from the process gas; and
3) removing, using a desulfurization circulating fluid, free ammonia from the process gas; and returning the desulfurization circulating fluid, having absorbed the free ammonia, to a desulfurization apparatus.

2. The method of claim 1, having at least one of the following features:
- step 3) utilizes a desulfurization circulating fluid from an oxidation chamber of a desulfurization circulating tank to remove free ammonia from the process gas;
- products of the method include ammonium sulfate fertilizer and ammonium bicarbonate fertilizer;
- a removing rate of CO₂ in step 2) ranges from 30 to 98%;
- the method further comprises:
producing ammonium bicarbonate fertilizer, in an ammonium bicarbonate posttreatment unit, from part of the decarbonization circulating fluid; and/or
feeding part of the decarbonization circulating fluid to a CO₂ regeneration system to conduct regeneration, thereby affording gaseous CO₂, wherein the regeneration of the decarbonization circulating fluid is performed in a CO₂ regeneration system, in which the operation parameters preferably include: an operating temperature at a tower bottom in a range from 90-150°C, preferably from 100-130°C, an operating temperature at a tower top in a range from 6-100°C, preferably from 70-90°C, a regeneration pressure at the tower bottom in a range from 0.2-0.7 MPa, preferably from 0.3-0.5 MPa, and a gas velocity in the tower in a range from 0.2-3 m/s, preferably from 0.3-2 m/s;
- the method further comprises producing, from gaseous CO₂, a downstream product, preferably including urea, soda ash, sodium bicarbonate, polycarbonate, food grade CO₂, CO₂ gas fertilizer, potassium bicarbonate; using the gaseous CO₂ in enhanced oil recovery; and/or sequestering the gaseous CO₂ in marine or underground.

3. The method of claim 1 further comprising:
between step 2) and step 3), 4) removing, using process water, free ammonia from the process gas; and/or,
after step 3), 5) removing, using process water, free ammonia from the process gas.

4. The method of claim 1, having at least one of the following features:
- the desulfurization circulating fluid includes a concentrated circulating fluid and an absorbing circulating fluid;
the concentrated circulating fluid has:
a pH of 1-6, preferably 2-4.5;
ammonium sulfite at a concentration of 0-0.2%; and
ammonium sulfate at a concentration of 10-60%; and
the absorbing circulating fluid has:
a pH of 4.5-6.5, preferably 4.8-6.2;
ammonium sulfite at a concentration of 0.1-3%; and
ammonium sulfate at a concentration of 10-38%;
- the decarbonization circulating fluid has:
a pH of 7-13, preferably 7.5-11, more preferably 8-9.5;
ammonium bicarbonate at a concentration of 3-40%, preferably 10-22%; and
an NH₃/CO₂ molar ratio of 0.6-4, preferably 1.2-3, more preferably 2-2.5;
- a temperature for the desulfurization absorbing is in a range from 5-55 °C, preferably 15-50 °C, more preferably 20-40 °C; and
- a temperature for the decarbonization absorbing is in a range from 0-45 °C, preferably 5-40 °C, more preferably 10-30 °C.

5. Apparatus for implementing the method of any one of claims 1 to 4, wherein the apparatus includes an ammonia-based desulfurization functional area, an ammonia-based decarbonization functional area, an ammonia washing functional area, an ammonium sulfate post-processing system, and an ammonium bicarbonate post-processing system; ammonia is used as a desulfurizing agent and a decarbonizing agent; a process gas enters first the desulfurization functional area for desulfurization to produce ammonium sulfate fertilizer; the desulfurized process gas enters the decarbonization functional area for removal of carbon dioxide therein, to produce an ammonium bicarbonate solution/slurry; the decarbonized process gas, that comprises free ammonia, enters the ammonia washing functional area for washing with an desulfurization circulating fluid and then with process water; after the washing, the ammonia-containing desulfurization circulating fluid and process water solution are returned to the desulfurization functional area, where they serve as an absorbing agent for desulfurization, and part of ammonium sulfate-containing ammonium bicarbonate solution is returned to the desulfurization functional area.

6. The apparatus of claim 5, having at least one of the following features:
- the apparatus comprises a desulfurization circulating tank comprising an oxidation chamber and an ammonia-adding chamber in fluid communication with each other, wherein the oxidation chamber is configured to allow contact and reaction between at least part of the reflux liquid from the absorption section and an oxygen-containing gas, and allow to take out at least part of the liquid phase thereof for circulation to the particulate removing section and to the ammonia washing functional area; and the ammonia-adding chamber is configured to be in fluid communication with the oxidation chamber, allow at least part of the reflux liquid from the absorption section to mix with an ammonia absorbent, and allow to take out a liquid stream therefrom for circulation to the absorption section;
- the ammonia washing functional area is further configured to wash the process gas with a process water before washing the process gas with the desulfurization circulating fluid; and the ammonia-based desulfurization functional area, the ammonia-based decarbonization functional area, and the ammonia washing functional area are disposed in one or more towers.

7. The apparatus of claim 5 wherein the desulfurization functional area is divided into a plurality of sections including a cooling and concentrating section, an absorbing section, and a particulate removing section, with each section being provided with at least one spraying layer, and with a device/component allowing gas to pass through being provided between any two adjacent sections,
preferably, the particulate removing section comprises:
a first particulate removing part configured to wash with concentrated, circulating ammonium sulfate-containing solution; and
a second particulate removing part configured to wash with dilute, circulating ammonium sulfate-containing solution,
with a device/component allowing gas to pass through being provided between the two parts;
the first particulate removing part utilizing the concentrated ammonium sulfate-containing solution having an ammonium sulfate concentration in a range of 10-38%, preferably 12-30%, and a pH in a range of 2.5-7.5, preferably 3-5.5; and
the second particulate removing part utilizing the dilute ammonium sulfate-containing solution having an ammonium sulfate concentration in a range of 0-5%, preferably 0.02-2%, and a pH in a range of 3-7;
preferably, the desulfurization functional area includes a cooling apparatus that is configured to maintain a temperature of process gas after desulfurization in a range of 5-55°C, preferably 15-50°C, and more preferably 20-40°C,
preferably, the cooling apparatus is arranged on a circulating pipeline configured to transport desulfurization circulating fluid, to cool the desulfurization circulating fluid and in turn the post-desulfurization process gas; alternatively, on a process gas/flue gas conduit in the desulfurization functional area, to directly cool the process gas,
with a circulate water and/or a chilled water being used as a coolant in the cooling apparatus.

8. The apparatus of claim 5 wherein the decarbonization functional area includes a cooling apparatus that is configured to maintain a temperature of process gas after decarbonization in a range of 0-45°C, preferably 5-40°C, and more preferably 10-30°C.

9. The apparatus of claim 5, having at least one of the following features:
- the desulfurization circulating fluid used for ammonia washing comes from the ammonium sulfate-containing washing fluid used for the particulate removing section of the ammonia-based desulfurization functional area, and the desulfurization circulating fluid, after having been used in the ammonia washing, is returned to the ammonia-based desulfurization functional area for desulfurization, with a pH of the ammonium sulfate-containing washing fluid being controlled at 2.5-7.5;
- the desulfurization circulating fluid used for ammonia washing comes from the ammonium sulfate-containing washing fluid used for the absorption section of the ammonia-based desulfurization functional area, and the desulfurization circulating fluid, after having been used in the ammonia washing, is returned to the absorption section of the desulfurization functional area for desulfurization, with a pH of the ammonium sulfate-containing washing fluid being controlled at 3-7;
- part of a resulting water solution after the ammonia washing enters, as makeup water, the circulating fluid for the particulate removing section of the desulfurization functional area, with a concentration of ammonia in the ammonia washing circulating fluid being controlled at 0-5%, preferably 0-1%.

10. The apparatus of claim 7 wherein part of the dilute ammonium sulfate washing solution is pumped out and sent to a purification membrane separation apparatus, with the produced purified water being used as makeup water for the ammonia washing functional area to control the ammonia concentration in the washing water and the concentration of the dilute ammonium sulfate solution for desulfurization washing, the excess being discharged from the apparatus for external use, and the concentrated solution entering the desulfurization absorption section.

11. The apparatus of claim 5, having at least one of the following features:
- each of the decarbonization functional area, the decarbonization functional area and the ammonia washing functional area utilizes one or a combination of a sprayer absorption, a plate absorption, a packed column absorption, and a floating-valve absorption column;
- the ammonium sulfate slurry produced from the desulfurization is subjected to solid-liquid separation, drying and packing into an ammonium sulfate product, alternatively, a wet ammonium sulfate product is output directly;
- the ammonium bicarbonate slurry produced from the decarbonization is subjected to solid-liquid separation, with the separated solution being returned to the decarbonization unit, with the separated ammonium bicarbonate being dried and packed into a product, alternatively, being output directly as a wet ammonium bicarbonate product;
- part or all of the ammonium bicarbonate solution/slurry produced from the decarbonization is heated to produce CO₂ and an ammonia solution, and the ammonia solution is returned to the decarbonization functional area for further use;
- the CO₂ is used for the production of downstream products, in enhanced oil recovery, in beverage production, or for underground sequestration;
- the ammonia-based desulfurization functional area is configured to operate under the following process parameters:
1) an empty tower gas velocity at 0.5-5 m/s, preferably 2-4 m/s;
2) a circulating fluid spraying density for each spray layer at 4-100 m³/m²-h, preferably 8-80 m³/m²-h;
3) a circulating fluid temperature at 5-55°C, preferably 20-40°C; and
4) a circulating fluid pH at 1-7;
- the decarbonization functional areas is configured to operate under the following process parameters:
1) an empty tower gas velocity at 0.1-5 m/s;
2) a temperature at 5-40°C, preferably 10-30°C; and
3) a circulating fluid pH at 7-11;
- the ammonia washing functional area is configured to operate under the following process parameters:
1) an empty tower gas velocity at 0.25-5 m/s;
2) a temperature at 0-50°C, preferably 3-40°C; and
3) a circulating fluid pH at 3-10;
- the apparatus further comprises a heat pump system that is configured to provide a chilled water required by cooling, a temperature of the chilled water from the heat pump system ranging from 3 to 25°C, preferably from 5 to 10 °C;
- the apparatus further comprises a CO₂ regeneration tower that is configured to conduct the regeneration of the decarbonization circulating fluid under the following process parameters:
a temperature for the regeneration at a bottom of the tower at 90-150°C, preferably 100-130 °C;
a temperature for the regeneration at a top of the tower at 6-100°C, preferably 70-90°C;
a pressure for the regeneration at a bottom of the tower at 0.2-0.7 MPa, preferably 0.3-0.5 MPa; and
a gas velocity in the regeneration tower at 0.2-3 m/s, preferably 0.3-2 m/s;
preferably, the apparatus further comprises a process water inlet that is disposed on an upper part of the regeneration tower;
preferably, the gaseous CO₂ obtained from the regeneration tower is used for production of downstream products, including urea, soda ash, sodium bicarbonate, polycarbonate, food-grade CO₂, CO₂ gas fertilizer, potassium bicarbonate, in enhanced oil recovery, beverage production, or welding, or for marine sequestration or underground sequestration;
preferably, the apparatus further comprises a solution heat exchanger; a reboiler; a circulating water cooler; a chilled water cooler; a CO₂ buffer tank, and a CO₂ compressor, wherein:
the decarbonization circulating pump delivers a fraction of its outlet solution, via the solution heat exchanger, to a CO₂ regeneration tower, from the top of which gaseous CO₂ is withdrawn, cooled with the coolers, then sent to the CO₂ buffer tank, and then delivered outside after having been compressed by the CO₂ compressor.
